# EUROPÄISCHE PATENTSCHRIFT

(11) **EP 0 547 481 B1**
(45) Veröffentlichungstag und Bekanntmachung des Hinweises auf die Patenterteilung: **05.03.1997**
(21) Anmeldenummer: 92120900.3
(22) Anmeldetag: 08.12.1992
(51) Int. Cl.: C08L 51/00

(54) **Hochschlagzähe Polymermischungen**
High impact polymer compositions
Mélanges de polymères à haute résistance aux chocs

(30) Priorität: 14.12.1991 DE 4141319
(43) Veröffentlichungstag der Anmeldung: 23.06.1993
(73) Patentinhaber: Röhm GmbH, 64293 Darmstadt (DE)
(72) Erfinder: Siol, Werner, Dr., W-6100 Darmstadt (DE); Fischer, Jens-Dieter, Dr., W-6101 Bickenbach (DE); Terbrack, Ulrich, W-6107 Reinheim 3 (DE); Koralewski, Klaus, W-6086 Riedstadt (DE)

(56) Entgegenhaltungen:
- DE-A- 3 743 199
- FR-A- 2 319 667
- GB-A- 2 056 465

## Beschreibung

### Gebiet der Erfindung

Die Erfindung betrifft hochschlagzähe Polymermischungen M, die aus zwei zwei- oder mehrphasigen Polymerisaten P1 und P2 bestehen, wobei die Hartphasen B1 und B2 der Polymerisate P1 und P2 sich in ihrem chemischen Aufbau unterscheiden und miteinander verträglich sind. Gegebenenfalls können die oben genannten Polymermischungen M ein weiteres thermoplastisches Polymerisat B'3 und/oder ein weiteres zwei- oder mehrphasiges Polymerisat P4 enthalten, wobei die Hartphase B4 des Polymerisats P4 von B1 und B2 verschieden und mit B1 und B2 verträglich ist. Die erfindungsgemäßen Polymermischungen M können als Spritzguß- oder Extrusionsmassen für mechanisch hochbeanspruchte Kunststoffteile, wie beispielsweise Gehäuse, Stoßfänger oder Tragevorrichtungen, eingesetzt werden.

### Stand der Technik

Die Aufgabe, relativ spröde Kunststoffe in technisch brauchbare Produkte mit verbesserter Schlagzähigkeit zu überführen, ist seit langem bekannt. In der Literatur sind Methoden zur Schlagzähmodifizierung von Kunststoff, insbesondere von Thermoplasten ausführlich beschrieben. So berichten beispielsweise D. Neufray und K.-H. Ott über die Schlagzähmodifizierung von Polybutylenterephthalat, Polyamiden und Polycarbonaten mit Butadienpfropfpolymerisaten (Angew. Makromol. Chem. 98, Seiten 213 bis 224, 1981). Dabei wird betont, daß die vernetzten Kautschukteilchen in der thermischen Matrix verankert bzw. angekoppelt sein müssen, da sonst, auch bei hohem Elastomergehalt, keine Verbesserung der Zähigkeit erreicht wird. Die Ankopplung kann physikalischer oder chemischer Natur sein, d.h. sie wird über eine Pfropfung der vernetzten Kautschukteilchen mit Polymeren, die für sich allein zu Thermoplasten polymerisierbar sind, erreicht, wobei für die Ankopplung die Zahl der Verschlaufungen (oder Entanglements), die die gepfropften Polymermoleküle mit den Matrixpolymermolekülen ausbilden, bzw. die thermodynamische Verträglichkeit zwischen gepfropften Polymermolekülen und Matrixpolymermolekülen maßgeblich sein soll.
Im allgemeinen werden daher Pfropfast-Polymere gewählt, die mit den Matrix-Polymeren identisch sind. Für die Schlagzähmodifizierung von Polymethylmethacrylat (PMMA) werden beispielsweise Elastomerpartikel, bestehend aus vernetztem Polybutadien oder Polybutylacrylat, die mit PMMA-Pfropfästen versehen sind, verwendet (vgl. hierzu EP 0 113 924 = US 4 513 118, DE-OS 33 29 765 = US 4 521 567, EP 0 080 072).
Eine deutliche Erhöhung der Schlagzähigkeit, insbesondere der Kerbschlagzähigkeit, von spröden Kunststoffen kann erzielt werden, wenn die an die vernetzten Elastomerpartikel gebundenen Pfropfast-Polymerpartikel von den Matrixpolymeren zwar chemisch verschieden sind, die Pfropfast-Polymeren jedoch mit den Matrixpolymeren thermodynamisch verträglich sind, das heißt Polymerlegierungen bilden. Solche Schlagzähmodifizierungsmittel und deren Mischungen mit Polyvinylchlorid, Polystyrol, Poly-α-methylstyrol, Chlorkautschuk, Polycarbonat bzw. Copolymeren aus Methylmethacrylat und α-Methylstyrol werden in DE-OS 37 43 199 (= US 4 906 609) beschrieben. Schlagzähmodifizierungsmittel, die Pfropfäste aufweisen, die in ihrer Verträglichkeit speziell auf Polycarbonat abgestimmt sind, sind Gegenstand der DE-OS 38 03 405 (= US 4 997 883).
Polymermischungen aus zwei Elastomer-modifizierten Polymerisaten, die dieselben Pfropfast- und Matrixpolymeren aber unterschiedliche Zähphasen besitzen, werden in EP-A 0 370 345 und EP-A 0 370 346 beansprucht. Weisen die Zähphasen bestimmte Teilchengrößen auf, so können Kombinationen guter Zähigkeit bei tiefen Temperaturen mit guter thermoplastischer Verarbeitbarkeit erzielt werden. EP-A 0 278 347 umfaßt thermoplastische Formmassen aus kautschukmodifizierten Vinylaromat-Polymerisaten und Polyalkylenethern, die Pfropfäste aus einem Mischpolymerisat, bestehend aus Alkylacrylaten, Cycloalkyl(meth)acrylaten und ggfs. Styrol, besitzen und die antistatisches Verhalten aufweisen.
EP-A 0 367 052 betrifft kautschukmodifizierte Formmassen enthaltend thermoplastischen Polyester und ein Gemisch zweier Pfropfkautschuke, bestehend aus Dienkautschuk mit Pfropfastcopolymeren aus Styrol, Acrylnitril und Methylmethacryl und Acrylatkautschuk mit denselben Pfropfastcopolymeren, die eine gute Zähigkeit bei tiefen Temperaturen aufweisen.
Die FR-A-2 319 667 beschreibt schlagfeste, thermoplastische Vinylchlorid-Polymer-Formmassen. Die Vinylchlorid-Polymerisate enthalten 1-10 Gew.% Ethylen-Vinylester-Copolymerisate und befinden sich im Gemisch mit Pfropfpolymerisaten von Styrol und/oder Methylmethacrylat oder Styrol und Acrylnitril und ggfls. Methylmethacrylat auf EPDM-Kautschuk. Beispiele für die Pfropfung von Methylmethacrylat enthält die Druck-Schrift indessen nicht.

In der GB-A-2 056 465 werden verträgliche Polymer mischungen aus einem Blockcopolymer aus Styrol und einem Diolefin und einem Pfropfcopolymer, erhalten durch Pfropfung von Styrol und bis zu 40 Gew.-% Acrylnitril und/oder Methylmethacrylat auf ein Elastomer bestehend aus Butadien Styrol und bis zu 10 Gew.-% Acrylnitril vorgeschlagen. Als Pfropfpolymerisat kann MBS fungieren mit einem Gehalt von mindestens 25 Gew.-% Styrol. Beispielhaft belegt ist ein Styrolgehalt von 30 Gew.-%.

### Aufgabe und Lösung

Obwohl schon eine Vielzahl an Patentschriften und weiterer Literatur zum Thema "Schlagzähmodifizierung von thermoplastischen Kunststoffen" existiert, besteht ein großes technisches Bedürfnis nach Schlagzähmodifizierungsmitteln, die die Schlag- und Kerbschlagzähigkeit von Thermoplasten unter Beibehaltung ihrer sonstigen positiven Eigenschaften deutlich erhöhen. So wird bei der Schlagzähmodifizierung von Polymethylmethacrylat (PMMA), wie in DE-OS 33 29 765 (= US 4 521 567) beschrieben, bei 30 Gew.-% Elastomeranteil die Kerbschlagzähigkeit gegenüber unmodifizierten PMMA um den Faktor 5 gesteigert, gleichzeitig reduziert sich jedoch die Vicat-Temperatur um 20 K, was für viele Anwendungen, insbesondere für thermisch stark belastete Spritzgußteile, prohibitiv ist.
Die in EP-A 370 345 und EP-A 370 346 angeführten Mischungen aus vernetztem und mit Styrol-Acrylnitril-Copolymeren gepfropften Silicon- und Acrylatkautschuken und Styrol-Acrylnitril-(SAN)-Copolymerisaten weisen zwar verbesserte Fließfähigkeiten gegenüber SAN-Copolymerisaten auf, die nur mit Acrylat-Elastomeren modifiziert sind, besitzen demgegenüber aber keine signifikant erhöhte Kerbschlagzähigkeit.
EP-A 0 367 052 beschreibt Formmassen aus Polyester und einem Gemisch zweier Pfropfkautschuke, einem Acrylat- und einem Butadienpfropfkautschuk, deren Tieftemperaturkerbschlagzähigkeit bei Steigerung des Anteils des Butadien-Pfropfkautschuk in der Kautschukmischung kontinuierlich steigt. Dies ist allerdings mit einer Einbuße im Elastizitätsmodul verbunden.

Aufgabe der vorliegenden Erfindung war es daher, Polymermischungen in Form von thermoplastischen Formmassen zur Verfügung zu stellen, die eine große Kerbschlag- und Schlagzähigkeit unter Beibehaltung der sonstigen positiven Eigenschaften der reinen Mischungskomponenten aufweisen.
Überraschend und in besonders geeigneter Weise wird diese Aufgabe durch die erfindungsgemäßen Polymermischungen M aus zwei zwei- oder mehrphasigen Polymerisaten P1 und P2, die jeweils aus mindestens einer gegebenenfalls vernetzten Zähphase A1, A2 mit einer Glasübergangstemperatur Tg < 10 Grad C und einer damit wenigstens teilweise kovalent verknüpften Hartphase B1, B2 aufgebaut sind, gelöst. Dabei ist obligatorisch, daß sich die Hartphasen B1 und B2 in ihrem chemischen Aufbau unterscheiden und daß sie, wenn sie nicht mit den Zähphasen kovalent verknüpft sind, beim Mischen miteinander Polymerlegierungen bilden, d.h. thermodynamisch verträglich sind. Als Komponenten für B1 und B2 sind ausgeschlossen: Polymerisate, die Monomereinheiten aus der Gruppe Acrylnitril, Methacrylnitril, Maleinsäureanhydrid und N-substituiertes Maleinimid mit aromatischen Substituenten enthalten.

### Die Zähphasen A der Polymerisate P

Die erfindungsgemäßen hochschlagzähen Polymermischungen M sind aus zwei zwei- oder mehrphasigen Polymerisaten P1 und P2 aufgebaut. P1 bzw. P2 bestehen aus mindestens einer gegebenenfalls vernetzten Zähphase A1 bzw. A2 mit einer Glasübergangstemperatur Tg < 10 Grad C, bevorzugt < -10 Grad C, die wenigstens teilweise kovalent mit mindestens einer thermoplastischen Hartphase B1 bzw. B2 mit einer Glasübergangstemperatur Tg > 30 Grad C, bevorzugt > 50 Grad C, verknüpft ist.

Die Zähphasen A1 bzw. A2 werden gewöhnlich als Kautschuke bezeichnet und sind definitionsgemäß Polymerisate A mit einer Glasübergangstemperatur Tg < 10 Grad C, vorzugsweise < -10 Grad C (die Bestimmung von Tg erfolgt nach H.F. Mark et al., Encyclopedia of Polymer Science and Engineering, 2nd Ed., Vol. 7, Seiten 531 bis 544, J. Wiley & Sons, 1989). Die Polymerisate A sind vorzugsweise aus der Gruppe, bestehend aus Polyolefinen, Polydienen, Polyacrylaten, Ethylenvinylacetat-Copolymeren oder Polysiloxanen ausgewählt.

Bei den Polyolefinen handelt es sich vorzugsweise um Homo- oder Copolymerisate des Ethylens, Propylens oder Isobutylens (vgl. Ullmanns Enzyklopädie der Technischen Chemie, 4. Aufl., Bd. 19, Seiten 167 bis 226, Verlag Chemie Weinheim, 1980; Kirk-Othmer, Encyclopedia of Chemical Technology, 3rd. Ed., Vol. 16, pp. 385 bis 499, Wiley Interscience, 1981). Im allgemeinen liegt das mittlere Molekulargewicht Mw der unvernetzten Polyolefine im Bereich von 10⁴ bis 10⁶ Dalton. Von besonderem Interesse sind Ethylen-Propylen-Dien (EPDM)-Copolymerisate (vgl. Kirk-Othmer, Encyclopedia of Chemical Technology, 3rd. Ed., Vol., 8, Seiten 492 - 500, Vol. 7, Seiten 687 693, J. Wiley; zur Herstellung vgl. S. Cesca, J. Polym. Sci. Makromol, Rev. 10, 1, 1975), deren mittlere Molekulargewichte Mw im allgemeinen im Bereich zwischen 5 . 10⁴ bis 5 . 10⁵ Dalton liegen. Die mittleren Molekulargewichte Mw, in Dalton oder auch g/mol, können mit Hilfe der Gelpermeationschromatographie oder der Streulicht-Methode bestimmt werden. (Vgl. H.F. Mark et al. Encyclopedia of Polymer Science and Engineering, 2nd Ed., Vol. 10, pp 1 - 10, J. Wiley & Sons, 1987). Als Dien-Bestandteil der EPDM-Copolymerisate werden insbesondere trans-1,4-Hexadien, Dicyclopentadien und Ethylidennorbornen verwendet. Die Glasübergangstemperaturen Tg werden zwischen -55 Grad C bis -30 Grad C (bei Sequenztypen) angegeben. Bei Ethylengehalten von 45 bis 60 Gew.-% sind die EPDM-Copolymerisate völlig amorph, bei Ethylengehalten > 70 Gew.-% treten teilkristalline Ethylensequenzen mit ca. 5 bis 10 aufeinanderfolgenden Ethyleneinheiten auf (Sequenztypen). Der Anteil an ungesattigten Gruppen im EPDM beträgt 2 bis 30, bevorzugt 5 bis 15 Doppelbindungen pro 1 000 Kohlenstoffatomen.

Die bevorzugte Vernetzung der EPDM-Zähphase kann durch thermische Radikalbildung an Polymerketten und anschließend Reaktion der so gebildeten Radikale mit den Doppelbindungen anderer Polymermoleküle und damit einer Bildung kovalenter Bindungen zwischen den Polymermolekülen bewirkt werden. Desweiteren können Radikale an Polymerketten durch homolytische Abspaltung von Atomen, insbesondere von Wasserstoffatomen, aus dem Polymermolekül erzeugt werden. Geeignet hierfür sind insbesondere Peroxide, wie tert.-Butylhydroperoxid, tert.-Butylperoctoat, Benzoylperoxid oder tert.-Butylperpivalat in Mengen von 0,05 bis 5 Gew.-% bezogen auf die EPDM-Polymerisation, wie sie auch als Polymerisationsinitiatoren verwendet werden.
Möglich ist auch die Anwendung von bekannten vernetzenden Monomeren mit zwei oder mehr ethylenisch ungesättigten, radikalisch polymerisierbaren Gruppen, wie beispielsweise (Meth)acrylester von Di- und Polyolen, wie z.B. Ethylenglykoldimethacrylat, oder insbesondere Allylverbindungen wie Triallylcyanurat. Sie kommen vorzugsweise in Mengen von 0,1 bis 5 Gew.-% bezogen auf das eingesetzte EPDM-Polymerisat zur Anwendung. Nach der Vernetzung liegen die EPDM-Zähphasen bevorzugt in Partikelform vor, wobei der Durchmesser dieser Gummiteilchen im allgemeinen zwischen 0,1 bis 10 µm, bevorzugt im Bereich zwischen 0,2 bis 5 µm liegt. Besonders bevorzugt sind solche Gummiteilchen, die Hartphaseneinschlüsse aufweisen (vgl. Ullmann loc.cit., Bd. 13, Seite 623, Kirk-Othmer, Encyclopedia of Chemical Technology, 3rd. Ed. Vol. 1, Seiten 442 bis 455, Wiley Interscience, 1981). Weiterhin können die Polymerisate A aus Polydienen bestehen, die vorzugsweise aus Butadien, 2-Chlorbutadien oder Polyisopren aufgebaut sind (vgl. Ullmann loc.cit, Bd. 13, Seiten 595 bis 635). Die mittleren Molekulargewichte Mw der unvernetzten Polydiene liegen im Bereich zwischen 10⁴ und 10⁶ Dalton. Besonders bevorzugt ist Polybutadien, das wie das Polyolefin EPDM thermisch, peroxidisch oder mit Monomeren, die zwei oder mehr ethylenisch ungesättigte, radikalisch polymerisierbare Gruppen aufweisen, wie oben beschrieben vernetzt wird. In einer weiteren bevorzugten Ausführungsform werden die kovalenten Bindungen zwischen den Polymermolekülen durch Reaktion mit elementarem Schwefel unter Ausbildung von Schwefelbrücken gebildet (vgl. Ullman, loc.cit., Bd. 13, Seiten 595 bis 635, Kirk-Othmer, Encyclopedia of Chemical Technology, Vol. 20, 3rd. Ed. Seiten 337 bis 364, Wiley Interscience, 1981). Die Glasübergangstemperaturen der Polybutadien-Zähphasen liegen bei -85 bis -75 Grad C und gewährleisten damit eine gute Tieftemperaturzähigkeit von Polybutadien-haltigen Polymerisaten (siehe hierzu Kirk-Othmer Encyclopedia of Chemical Technology, Vol. 8, Seiten 609, Wiley Interscience, New York, 1979).
Als bevorzugte Polybutadien-haltige Polymerisate P kommen Styrol-Butadien-Copolymerisate (SB nach DIN 7728) zum Einsatz, die zwischen 5 und 50 Gew.-%, bevorzugt zwischen 10 und 25 Gew.-% Butadien enthalten (vgl. hierzu Kirk-Othmer, Encyclopedia of Chemical Technology, Vol., 8, Seiten 608 ff, Wiley Interscience, New York. 1979).

Für die Polymerisate A können auch Polyacrylate verwendet werden, deren Monomerbausteine eine Glasübergangstemperatur Tg des resultierenden Homo- oder Copolymerisats von < 10 Grad C, bevorzugt < -10 Grad C gewährleisten. Die Glastemperatur der Homo- oder Copolymerisate ist bekannt bzw. läßt sich in bekannter Weise vorherbestimmen (vgl. Hierzu J. Brandrup, E.H. Immergut, Polymer Handbook III; Seiten 144 bis 148, John Wiley, New York, 1975).
Vorzugsweise werden die Polyacrylate durch Polymerisation in wäßriger Emulsion, teilweise auch in Suspension hergestellt. Besonders bevorzugt ist die Emulsionspolymerisation, da auf diesem Weg Polyacrylat-Zähphasen mit definiertem Teilchenaufbau erzeugt werden können (vgl. H. Rauch-Puntigam, Th. Völker, Acryl- und Methacrylverbindungen, Seiten 217 bis 230, Springer-Verlag 1967). Die so erzeugten Latexteilchen, die eine äußere Hülle aus dem noch zu beschreibenden Polymerisat aufweisen, enthalten in ihrem Inneren das vernetzte Polyacrylat oder Polymerisat A. Besonders bevorzugt sind dabei Latex-Teilchen mit einem dreistufigen Aufbau, also solche Teilchen, die in dem Polyacrylat A noch einen harten Polymerkern, der auch aus Polymerisat B bestehen kann, aufweisen.
Insgesamt sollen diese annähernd kugelförmigen Polyacrylat-Zähphasen (mit oder ohne eingelagertem Kern) Durchmesser von 0,1 bis 3 µm, bevorzugt 0,2 bis 1 µm aufweisen. Prinzipiell ist der Aufbau solcher Latexteilchen und die Isolierung des Polymerisatfeststoffs in der US-PS 45 13 118 beschrieben.
Zweckmäßig arbeitet man bei der Emulsionspolymerisation im neutralen bzw. leicht sauren pH-Bereich, wobei als Emulgatoren bevorzugt Alkylsulfate bzw. Alkylsulfonate verwendet werden. Als Polymerisationsinitiatoren werden zweckmäßigerweise wasserlösliche Azoverbindungen oder organische Peroxide sowie anorganische Peroxide, wie z.B. Kaliumperoxodisulfat, bzw. auch Redoxsysteme, wie beispielsweise Peroxodisulfat/Bisulfit, verwendet. Der Gehalt an Emulgatoren liegt bei 0,1 bis 5 Gew.-%, der Gehalt an Polymerisationsinitiatoren bei 0,001 bis 1 Gew.-% bezogen auf die Monomeren. Die Polyacrylat-Zähphasen sind bevorzugt aus niederen Alkylacrylaten mit 1 bis 10 Kohlenstoffatomen im Alkylrest, besonders bevorzugt aus Ethylacrylat, Butylacrylat, 2-Ethylhexylacrylat oder Mischungen daraus, sowie aus Alkoxyacrylaten (vgl. US-PS 3 488 331), aufgebaut. In der Regel enthalten diese Polyacrylat-Zähphasen noch vernetzende Monomere, die mindestens zwei ethylenisch ungesättigte, radikalisch copolymerisierbare Gruppen besitzen, in Anteilen von 0,1 bis 5 Gew.-% bezogen auf die Monomeren. Bevorzugt werden als vernetzende Monomere eingesetzt: (Meth)acrylsäureester von Diolen und Polyolen, wie Ethylenglykoldimethacrylat, 2 polymerisierbaren Gruppen unterschiedlicher Reaktivität oder Pentaerythrit-tetraacrylat, aromatische Verbindungen mit zwei Vinyl- oder Allylgruppen, Allylmethacrylat als Pfropfvernetzer oder Triallylcyanurat.
Bei der Herstellung der gepfropften Zähphasen-Polymerisate A durch Suspensionspolymerisation werden vorwiegend nichtionogene, wasserlösliche Dispersionsstabilisatoren, sowie als Initiatoren monomerlösliche organische Peroxide bzw. Azoverbindungen verwendet.

Als Zähphasen-Polymerisate A können desweiteren Polysiloxane verwendet werden. Üblicherweise besitzen diese gebräuchlichen Silikonkautschuke eine durch spezielle Substituenten modifizierte Polydimethylsiloxan-Kette und weisen Glasübergangstemperaturen zwischen -120 Grad C und -80 Grad C auf. Die bei Raumtemperatur vernetzenden Polysiloxan-Typen sind endständig funktionalisiert und haben mittlere Molekulargewichte Mw zwischen 10⁴ und 10⁵ Dalton. Sogenannte "heißvulkanisierende" Polysiloxan-Typen, bevorzugt auf Basis Polydimethoxysiloxan, lassen sich mit schnell zerfallenden Diarylperoxiden bei erhöhter Temperatur, beispielsweise bei 150 Grad C vernetzen. (Vgl. Winnacker-Küchler, Band 6, Seiten 842 bis 849, 4. Aufl., Carl Hanser, München 1982; Kirk Othmer, loc.cit., Vol., 20, Seiten 943 bis 953).

Verwendet man Ethylen-Vinylacetat (EVA)-Copolymerisate als Zähphase A, liegt der Vinylacetat-Gehalt in der Regel im Bereich zwischen 40 bis 75 Gew.-% bezogen auf die Monomeren, bevorzugt zwischen 40 bis 50 Gew.-%. Die mittleren Molekulargewichte Mw liegen hier zwischen 3 . 10⁴ und 4 . 10⁵ Dalton. Die EVA-Copolymerisate werden mit Peroxiden, wie Dicumylperoxid, oder mehrfunktionellen ethylenisch ungesättigten, radikalisch copolymerisierbaren Monomeren, wie beispielsweise Triallylcyanurat, vernetzt (vgl. hierzu Winnacker-Küchler loc.cit., Band 6, Seiten 570, 571).
Die vernetzten Zähphasen A auf Basis Polysiloxan- oder EVA-Copolymerisaten weisen Partikelgrößen im Bereich zwischen 0,1 und 5 µm auf und enthalten in einer bevorzugten Ausführungsform Hartphaseneinschlüsse.

### Die Hartphasen B der Polymerisate P

Die Hartphasen B sind mit den jeweiligen Zähphasen A zumindest zu 5 Gew.-%, bevorzugt zu mehr als 15 Gew.-% bezogen auf P durch Pfropfung kovalent verbunden. Die Polymermischungen M bestehend aus zwei Polymerisaten P1 und P2 sind dadurch charakterisiert, daß die Hartphasenpolymerisate B1 und B2, wenn sie nicht mit den Zähphasenpolymerisaten A1 und A2 kovalent verknüpft sind, miteinander verträgliche Polymermischungen bilden, die für beliebige Zusammensetzungsverhältnisse B1 : B2 verträgliche Polymermischungen (Polymerlegierungen) mit Entmischungstemperaturen LCST (Lower Critical Solution Temperature) über 100 Grad C aufweisen.
Unter Entmischungstemperatur im Sinne der vorliegenden Erfindung sei diejenige Temperatur verstanden, bei der der Phasenübergang homogen nach heterogen durch eine Trübung der transparenten Polymerlegierung visuell erkennbar wird (vgl. hierzu Kirk-Othmer, Encyclopedia of Chemical Technology, 3rd Ed., Vol. 18, Seiten 457 ff, Wiley Interscience, New York, 1979, oder Brandrup, Immergut, Polymers", Polymer Handbook, 2nd Ed. III, Seiten 211 bis 213). Das LCST-Verhalten (vgl. hierzu D.R. Paul, Polymer Blends and Mixtures, Seiten 1 bis 3, Martinus Nijhoff Publishers, Dordrecht, Boston Lancaster, 1985) wird durch eine Bestimmung des temperaturabhängigen Trübungspunkts der transparenten Polymerlegierungen auf einer Kofler-Heizbank (Chem.- Ing. Techn. 1950, Seite 289) ermittelt. Die Herstellung dieser Polymerlegierungen kann thermomechanisch durch Schmelzmischen im Extruder, auf einem Walzenkneter, in einem Brabender-Kneter oder in einem beliebigen intensiv mischenden Aggregat vorgenommen werden (vgl. hierzu Kirk-Othmer, Encyclopedia of Chemical Technology, 3rd Ed., Vol. 18, Seiten 443 ff, Wiley Interscience, New York, 1979). Desweiteren können die Mischungspartner in einem gemeinsamen Lösungsmittel gelöst und intensiv gemischt werden. Die resultierende Lösung kann zu einem transparenten Film ausgegossen und getrocknet bzw. koaguliert und gefriergetrocknet werden (vgl. Kirk-Othmer, loc.cit., Vol. 18, Seite 444).

Die Hartphase B1 ist ein Polymerisat ausgewählt aus der Gruppe, Polystyrol, Poly-α-methylstyrol, Polycarbonat, Polyalkylenterephthalat oder Chlorkautschuk. Die Hartphase B2 besteht aus einem Polymeren der Formel I: 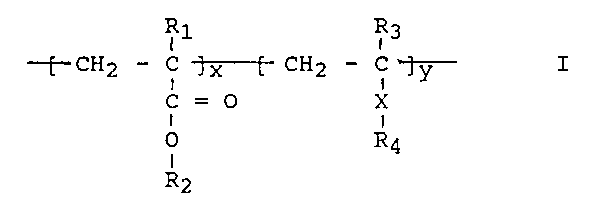 worin:
R_{1,} R₃ für Wasserstoff, Methyl,
R₂ für Alkyl mit 1 bis 6 Kohlenstoffatomen
-X- für 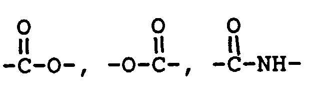 und
R₄ für einen gegebenenfalls substituierten Cycloalkylrest mit 5 bis 8 Kohlenstoffatomen oder für einen gegebenenfalls substituierten Arylrest mit 6 bis 12 Kohlenstoffatomen
steht,
und
x und y sich - gegebenenfalls mit weiteren in Mengen von 0 bis 20 Gew.-% vorhandenen Monomeren - zu 100 Gew.-% ergänzen, mit der Maßgabe, daß y einen Bereich zwischen 0 und 100 Gew.-% kennzeichnet.

Die in Mengen von bis zu 20 Gew.-% vorhandenen weiteren Monomeren können beispielsweise sein : Styrol, α-Methylstyrol, Acryl- oder Methacrylsäure, Acrylate oder Methacrylate mit Alkylestergruppen, die mehr als 6 Kohlenstoffatome aufweisen.

Beispiele für die Monomereinheiten 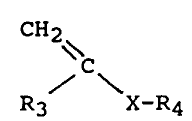 sind: Phenyl(meth)acrylat, Cyclohexyl(meth)acrylat, Cyclopentyl(meth)acrylat, 4-Methoxyphenyl(meth)acrylat, Cyclohexylmethacrylamid und/oder Phenylmethacrylamid.

In einer bevorzugten Ausführung der Erfindung besteht die Hartphase B1 aus Polystyrol oder Poly-α-methylstyrol, während die Hartphase B2 aus einem Polymeren der Formel II aufgebaut ist: 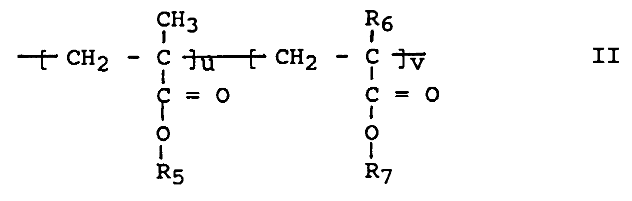 worin
R₅ für Methyl, Ethyl,
R₆ für Wasserstoff, Methyl,
und
R₇ für einen gegebenenfalls substiuierten Cycloalkylrest mit 5 bis 8 Kohlenstoffatomen, oder einem gegebenenfalls verzweigten Alkylrest mit 4 bis 8 Kohlenstoffatomen, steht,
sowie
u und v sich - gegebenenfalls mit weiteren in Mengen von 0 bis 20 Gew.-% vorhandenen Monomeren - zu 100 Gew.-% ergänzen, mit der Maßgabe, daß v einen Bereich von 5 bis 95 Gew.-% kennzeichnet.

Beispielhaft für die Monomereinheiten 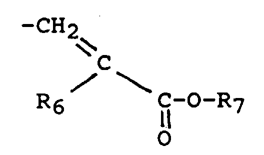 mit heterocyclischen Substituenten sei genannt: 2,2 Dimethyl-1,3-dioxolan-4-ylmethylmethacrylat.

Als Mischungskomponenten B1, B2, B'3 und B4 sind ausgeschlossen:
(Co)polymerisate, die Monomereinheiten, ausgewählt aus der Gruppe Acrylnitril, Methacrylnitril, Maleinsäureanhydrid und N-substituiertes Maleinimid mit aromatischen Substituenten enthalten. So sind in JP 59 62 658 Mischungen aus Acrylnitril-Butadien-Styrol-Terpolymerisaten, EPDM-Elastomerphasen mit Pfropfästen aus Styrol-Acrylnitril-Copolymerisat und Butylacrylat-Styrol-Elastomerphasen mit Polymethylmethacrylat-Pfropfästen beschrieben.

Beispielhaft für Polymerlegierungen aus B1 und B2 (dies gilt auch für Polymerlegierungen aus B1 und B'3, B1 und B4, B2 und B'3, B2 und B4 sowie B'3 und B4) seien genannt:
- 1. Bisphenol-A-Polycarbonat /: Copolymerisat aus Methylmethacrylat und substituiertem Methacrylamid (US 4 749 749)
- 2. Bisphenol-A-Polycarbonat /: Copolymerisat aus Methylmethacrylat und Cyclohexylmaleinimid (US 4 950 716)
- 3. Bisphenol-A-Polycarbonat /: Copolymerisat aus Methylmethacrylat und Cycloalkyl(aryl)methacrylat (US 4 906 696, US 4 906 699)
- 4. Polystyrol /: Copolymerisat aus Alkylmethacrylat und Cycloalkyl(meth)acrylat (US 4 898 912, US 4 906 699)
- 5. Polystyrol /: Copolymerisat aus Alkylmethacrylat und Methacrylat mit heterocyclischem Esterrest (US 4 985 504)
- 6. Poly-α-Methylstyrol /: Copolymerisat aus Alkylmethacrylat und Cycloalkyl(meth)acrylat (US 4 849 479, US 4 906 699)
- 7. Polyalkylenterephthalat /: Copolymerisat aus Alkylmethacrylat und Aryl-(meth) acrylat (WO 9 111 490)
- 8. Copolymerisat aus Styrol und Alkylacrylat /: Polyalkylmethacrylat (EP-A 0 359 185)

Ist neben den Polymerisaten P1 und P2 mit den Hartphasen B1 und B2 ein weiteres thermoplastisches Polymerisat B'3 und/oder ein weiteres zwei- oder mehrphasiges Polymerisat P4 mit mindestens einer gegebenenfalls vernetzten Zähphase A4 und mindestens einer mit A4 zumindest teilweise verknüpften thermoplastischen Hartphase B4 anwesend, so gelten für die erfindungsgemäßen Polymermischungen folgende Bedingungen: ternäre bzw. quaternäre Polymerlegierungen mit Entmischungstemperaturen (LCST) über 100 Grad C müssen bilden: B1, B2 und B'3, B1, B2 und B4 bzw. B1, B2, B'3 und B4. Beispiele hierfür sind:

| B1 | B2 | B'3 (B4) |
|---|---|---|
| Bisphenol-A-Polycarbonat | Polystyrol | Copolymerisat aus Methylmethacrylat und Cycloalkylmethacrylat (US 4 898 912, US 4 906 699) |
| | | |
| Bisphenol-A-Polycarbonat | Polyalkylenterephthalat | Copolymerisat aus Methylmethacrylat und Aryl(meth)acrylat (US 4 906 696, WO 9 111 490) |

wobei B1, B2, B'3 und B4 gegenseitig beliebig austauschbar und nicht mit einer gegebenenfalls vernetzten Zähphase verknüpft sind. Als thermoplastische Polymerisate B'3 werden beispielsweise verwendet:
a) Polycarbonate (nach DIN 7728 T1), wie insbesondere Polykondensationsprodukte aus 4,4'-Dihydroxydiphenylalkanen (Bisphenole) mit Kohlensäure. Ihr mittleres Molekulargewicht Mw liegt in der Regel im Bereich zwischen 2 . 10⁴ bis 6 . 10⁴ Dalton (vgl. hierzu Kirk-Othmer, Encyclopedia of Chemical Technology 3rd Ed., Vol. 6, Seiten 106 bis 116, H. Schnell, Chemistry & Physics of Polycarbonates, J. Wiley 1982).
b) Polyalkylenterephthalate, wie Polyethylenterephthalat oder Polybutylenterephthalat, deren mittleres Molekulargewicht Mw in der Regel zwischen 10⁴ und 2 . 10⁵ Dalton liegt (vgl. Kirk-Othmer, Encyclopedia of Chemical Technology, 3rd. Ed. Vol. 18, Seiten 549 bis 594, J. Wiley 1982).
c) Polystyrol (nach DIN 7741 E), das als Formmasse ein mittleres Molekulargewicht Mw von vorzugsweise zwischen 10⁵ und 5 . 10⁵ Dalton aufweist (vgl. Kirk-Othmer, loc.cit. Vol. 21, Seiten 801 ff).
d) Polyvinylchlorid (nach DIN 7748 E und 7749 E), mit einem mittleren Molekulargewicht Mw zwischen 1,5 x 10⁴ und 10⁵ Dalton (vgl. Kirk-Othmer loc.cit., Vol. 23, Seiten 886 bis 936).

Die Verknüpfung der Zähphase A und der Hartphase B in den Polymerisaten P (Pfropfung von B auf A)

Mit dem Begriff "Pfropfung" wird der Prozeß bezeichnet, bei dem in Gegenwart eines Polymeren oder Copolymeren ein oder mehrere Monomeren polymerisiert werden, die dann als neue Polymeräste kovalent an das Kohlenstoffgerüst des vorgelegten Polymerisats gebunden sind.
Vernetzte EPDM-Zähphasen A werden typischerweise in einem organischen Lösungsmittel in Gegenwart einer oder mehrerer Monomerarten und eines Polymerisationsinitiators gepfropft. Hierbei wird die Reaktion zweckmäßigerweise so geführt, daß eine hohe Pfropfausbeute entsteht d.h., daß möglichst hohe Anteile der Pfropfast(co)polymeren B kovalent an die EPDM-Zähphase A gebunden sind. Desweiteren ist es zweckmäßig, daß die gepfropften Polymerisate B ein mittleres Molekulargewicht Mw zwischen 10⁴ und 5 . 10⁵, bevorzugt zwischen 2 . 10⁴ und 10⁵ aufweisen. Beispielsweise wird bei der Pfropfung von EPDM bei 120 Grad C in Butylacetat als Lösungsmittel die Polymerisation der Monomeren zum Hartphasenpolymerisat B durchgeführt und anschließend bei ca. 80 Grad C unter Zugabe weiterer Monomerer, eines Pfropfvernetzers mit zwei oder mehr ethylenisch ungesättigten, radikalisch polymerisierbaren Gruppen, wie beispielsweise Allylmethacrylat oder Triallylcyanurat, sowie eines Polymerisationsinitiators, wie beispielsweise Dibenzoylperoxid oder tert.-Butylperoctoat, zu Ende geführt. Zweckmäßigerweise wird die Polymerisation in Gegenwart von Polymerisationsreglern, wie z.B. Mercaptanen, durchgeführt. Der gepfropfte EPDM-Kautschuk (= Polymerisat P) wird beispielsweise durch Fällung mit anschließender Trocknung oder durch Entgasen auf dem Extruder gewonnen. Die Herstellung der Dienkautschuk-Pfropfgrundlage und der Pfropfpolymerisate ist bekannt und wird vorteilhaft in einem zweistufigen Prozeß durchgeführt (vgl. hierzu EP-A 0 367 052). Eine ausführliche Beschreibung der Herstellung von ABS-Polymerisaten mit vernetzter Dienkautschuk-Elastomerphase und der Pfropfung von Styrol-Acrylnitril-Copolymerisat als thermoplastischer Hartphase über Emulsions- oder Masse-Polymerisation findet sich in Ullmanns Enzyklopädie der technischen Chemie (Bd. 19, Seiten 280 bis 286, 1981, Verlag Chemie, Weinheim) oder in Kirk-Othmer, Encyclopedia of Chemical Technology, 3rd. Ed. Vol. 1, Seiten 442 - 455, Wiley Interscience, 1981). Der gepfropfte Dienkautschuk (= Polymerisat P) wird beispielsweise durch Fällung mit anschließender Trocknung des Feuchtpulvers oder mit einem Entgasungsextruder isoliert.
Bei vernetzten Zähphasen A auf Polyacrylat-Basis werden vorzugsweise in der 2. Stufe einer zweistufigen Emulsionspolymerisation die Hartphasen B aufgepfropft. Es entstehen Latex-Teilchen mit einer Kern-Schale-Struktur, wobei sowohl die gepfropften als auch ungepfropften Anteile der Hartphasen(co)polymerisate B thermoplastisches Verhalten zeigen. Prinzipiell ist der Aufbau solcher Latexteilchen und die Isolierung des Polymerisatfeststoffes in US 4 513 118 beschrieben. Bei der Pfropfung der Hartphase B werden im allgemeinen dieselben Polymerisationsinitiatoren und Emulgatoren wie bei der Polymerisation der Zähphase A verwendet. Die gepfropften Acrylatlatex-Teilchen (= Polymerisat P) werden vorzugsweise durch Fällung, Sprühtrocknung, Gefrierkoagulation oder durch Abquetschen mit dem Extruder gewonnen.
Bestehen die Zähphasen A in der Hauptsache aus Polysiloxanen oder Ethylenvinylacetatcopolymerisaten, so erfolgt die Pfropfung des Hartphasenpolymerisats B vorzugsweise in Emulsion oder in Suspension. In einer bevorzugten Ausführungsform wird die Zähphase A mit peroxidischen Polymerisationsinitiatoren erst während und/oder nach der Pfropfung der Hartphase B vernetzt. Analog wie bei den Acrylatlatex-Teilchen erfolgt die Aufarbeitung der gepfropften Polysiloxane oder Ethylenvinylacetat-Copolymerisate (= Polymerisat P) durch Fällung, Sprühtrocknung, Gefrierkoagulation oder Abquetschen mit dem Extruder.

### Herstellung der Polymermischungen M

Die Polymermischungen M können durch unterschiedliche Verfahren hergestellt werden. Beispielsweise werden Sie durch intensives mechanisches Vermischen der Mischungskomponenten P1 und P2, bzw. P1, P2 und B'3 und/oder P4 in der Schmelze hergestellt. Ebenso kann die Polymermischung M aus gemeinsamen Fällungsmitteln erzeugt werden. Der Mischungsart sind keine Grenzen gesetzt. In einer bevorzugten Ausführungsform werden die Mischungskomponenten als Feststoffe, beispielsweise in Form eines Pulvers, Perlpolymerisats oder bevorzugt eines Granulats unter Verwendung langsam laufender Mischaggregate, wie z.B. Trommel-, Rhönrad-, Doppelkammer- oder Pflugscharmischer, zunächst intensiv vermischt (vgl. Ullmanns Encyclopedia of Industrial Chemistry, Vol. B2, Seiten 27/1 - 27/16, 5th Ed., Verlag Chemie, Weinheim, 1988). Anschließend erfolgt die thermoplastische Aufarbeitung durch homogenes Mischen in der Schmelze unter Verwendung von heizbaren Mischaggregaten bei den dafür geeigneten Temperaturen von beispielsweise 150 bis ca. 300 Grad C in Knetern oder vorzugsweise in Extrudern, wie z.B. Ein- oder Mehrschneckenextrudern oder gegebenenfalls in Extrudern mit oszillierender Schnecke und Scherstiften (z.B. im BUSSCO-Kneter). Nach diesem Verfahren werden im allgemeinen Gleichkorngranulate (Würfelform, Rundkorn) mit einer Korngröße zwischen 2 und 3 mm hergestellt.

### Vorteilhafte Wirkungen

Überraschenderweise besitzen die erfindungsgemäßen hochschlagzähen Polymermischungen M in allen Mischungsverhältnissen P1 : P2 oder P1 : P2 : B'3 oder P1 : P2 : P4 oder P1 : P2 : B'3 : P4 höhere Kerbschlagzähigkeiten als die reinen Mischungskomponenten P1, P2, B'3 oder P4.
Bevorzugte Mischungsverhältnisse sind:
- P1 zu P2 =: 99 zu 1 Gew.-% bis 1 zu 99 Gew.-%, besonders bevorzugt 95 zu 5 Gew.-% bis 5 zu 95 Gew.-% ganz besonders bevorzugt 85 zu 15 Gew.-% bis 15 zu 85 Gew.-%.

In der Regel liegt der Anteil an B'3 zwischen 0 und 50 Gew.-%. Der Anteil von P4 kann ebenfalls zwischen 0 und 50 Gew.-% liegen.

Mit dieser Verbesserung ist eine deutlich verringerte Reduktion der Wärmeformbeständigkeit im Vergleich zu Kunststoffen verbunden, die mit schlagzähmodifizierenden Zusätzen des Standes der Technik ausgerüstet sind. Somit können Polymermischungen M, bestehend aus den Komponenten P1 und P2, vorteilhaft für die Schlagzähmodifizierung von thermoplastischen Kunststoffen B'3 unter den erfindungsgemäßen Bedingungen genutzt werden.

Die erfindungsgemäßen Polymermischungen werden bevorzugt als Spritzguß- oder Extrusionsmassen für mechanisch hochbeanspruchte Formteile, wie beispielsweise Gehäuse, Stoßfänger oder Tragevorrichtungen eingesetzt.

Die nachfolgenden Beispiele dienen zur Erläuterung der Erfindung. Die Schlagzähigkeit (SZ) wird nach ISO 179, die Kerbschlagzähigkeit (KSZ) nach ISO 180 bestimmt. Die Vicat-Erweichungstemperatur (VST) wird nach DIN 53 460 bestimmt.

### BEISPIELE

### Beispiel 1

### Synthese eines MMA-Cyclohexylmethacrylatcopolymeren mit EPDM als Zähphase (Polymer P'1)

Die Herstellung dieses Pfropfpolymeren erfolgt gemäß DE-OS 37 43 199,4:
200 g EPDM (Produkt EPSYN ^{R} 55 der Fa. Copolymer) werden als 20 %ige Lösung in Butylacetat vorgelegt. Dazu tropft man unter Rühren bei 120 Grad C innerhalb von 2 Stunden eine Mischung aus
260 g Methylmethacrylat (MMA)
120 g Cyclohexylmethacrylat
20 g Cyclohexylacrylat
6 g tert.Butylperoctoat
600 g Butylacetat

Danach wird 15 Minuten gerührt, auf 80 Grad C gekühlt, eine Mischung aus 10 g Trisallylcyanurat, 10 g MMA und 4 g tert.Butylperoctoat zugesetzt, 2 Stunden bei 80 Grad C und danach 2 Stunden bei 90 Grad C gerührt. Nach Abkühlen wird in Methanol ausgefällt. Es entsteht ein Pfropfpolymeres mit folgender Zusammensetzung:
66 Gew.-% Copolymerisat aus MMA, Cyclohexylacrylat/methacrylat und
33 Gew.-% EPDM

### Beispiel 2

75 Gew.-Teile des Polymeren P'1 gemäß Beispiel 1 werden mit 25 Gew.-Teilen eines Polystyrol-Polybutadienblockcopolymeren (Styrolux ^{R} KR 2682) (Polymer P'2) abgemischt.
Aus dieser Mischung werden Prüfplättchen gespritzt. Man erhält einen zähen, weißen Prüfkörper, an dem folgende Werte ermittel wurden:
VST (Anlieferung, Verfahren B): 53 Grad C
SZ nach Charpy (23 Grad C) Iso 179: 41,4 KJ/m²
KSZ nach Izod (23 Grad ) Iso 180: 3,2 KJ/m²

### Beispiel 3

50 Gew.-Teile des Polymeren P'1 gemäß Beispiel 1 werden mit 50 Gew.-Teilen Styrolux ^{R} KR 2682 (= Polymer P'2) abgemischt. Aus dieser Mischung werden Prüfplättchen gespritzt. Man erhält einen zähen, weißen Prüfkörper, an dem folgende Werte ermittelt wurden:
VST (Anlieferung, Verfahren B): 57 Grad C
SZ nach Charpy (23 Grad C) Iso 179: ohne Bruch
KSZ nach Izod (23 Grad C) Iso 180: 6,1 KJ/m²

### Beispiel 4

Man verfährt wie in den Beispielen 2 und 3, wählt jedoch folgendes Mischungsverhältnis:
25 Gew.-Teile Polymer P'1 gemäß Beispiel 1
75 Gew.-Teile Styrolux ^{R} KR 2682 = P'2
Man erhält eine hochschlagzähe, weiße Formmasse, für die folgende Werte ermittel wurden:

VST (Anlieferung, Verfahren B): 60 Grad C
SZ nach Charpy (23 Grad C) Iso 179: ohne Bruch
KSZ nach Izod (23 Grad C) Iso 180: T 37,2 KJ/m²

### Beispiel 5

Spritzt man Polymer P'2 (Polystyrol-butadien-Blockcopolymer) allein, so erhält man Prüfkörper, die insbesondere in der Kerbschlagzähigkeit deutlich hinter der Abmischung (Beispiele 2 - 4) zurückbleiben.

### Polymer P'2

SZ nach Charpy Iso 179 (23 Grad C): ohne Bruch
KSZ nachIzod Iso 180 (23 Grad C): 1,7 KJ/m²

Ebenso bleibt Polymer P'1 allein deutlich hinter den Abmischungen gemäß den Beispielen 2 - 4 zurück.

## Patentansprüche

1. Hochschlagzähe Polymermischungen M enthaltend zwei zwei- oder mehrphasige Polymerisate P1 und P2, wobei P1 aus mindestens einer gegebenenfalls vernetzten Zähphase Al mit einer Glasübergangstemperatur Tg < 10 Grad C, die wenigstens teilweise kovalent mit mindestens einer thermoplastischen Hartphase B1 mit einer Glasübergangstemperatur Tg > 30 Grad C, verknüpft ist, besteht und P2 aus mindestens einer gegebenenfalls vernetzten Zähphase A2 mit einer Glasübergangstemperatur Tg < 10 Grad C, die wenigstens teilweise kovalent mit mindestens einer thermoplastischen Hartphase B2 mit einer Glasübergangstemperatur Tg > 30 Grad C verknüpft ist, besteht,
dadurch gekennzeichnet, daß
a) die Hartphase B1 aus einem Polymerisat, das aus der Gruppe, Polystyrol, Polymethylstyrol, Polycarbonat, Polyalkylenterephthalat, oder Chlorkautschuk ausgewählt ist, besteht, sowie daß
b) die Hartphase B2 aus einem Polymeren der Formel I: 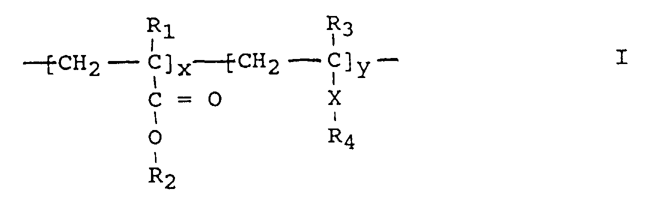
worin
R₁, R₃ für Wasserstoff, Methyl,
R₂ für Alkyl mit 1 bis 6 Kohlenstoffatomen,
-X- für 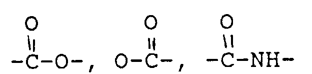
und
R₄ für einen gegebenenfalls substituierten Cycloalkylrest mit 5 bis 8 Kohlenstoffatomen oder für einen gegebenenfalls substituierten Arylrest mit 6 bis 12 Kohlenstoffatomen steht,
und
x und y sich - gegebenenfalls mit weiteren in Mengen von 0 bis 20 Gew.-% vorhandenen Monomeren - zu 100 Gew.-% ergänzen, mit der Maßgabe, daß y einen Bereich zwischen 0 und 100 Gew.-% kennzeichnet,
besteht, sowie daß
c) Mischungen aus den Hartphasenpolymerisaten B1 und B2, wenn sie nicht mit den Zähphasenpolymerisaten A1 und A2 kovalent verknüpft sind, Entmischungstemperaturen von über 100 Grad C aufweisen, sowie daß
d) die Hartphasenpolymerisate B1 und B2 keine Monomereinheiten, ausgewählt aus der Gruppe Acrylnitril, Methacrylnitril, Maleinsäureanhydrid und N-substituiertes Maleinimid mit aromatischen Substituenten enthalten.

2. Hochschlagzähe Polymermischungen M nach Anspruch 1, dadurch gekennzeichnet, daß
e) neben den Polymerisaten P1 und P2 noch ein weiteres einphasiges thermoplastisches Polymerisat B'3 in Mengen bis zu 50 Gew.-% zugegen ist, wobei sich die Anteile von P1, P2 und B'3 zu 100 Gew.-% ergänzen, sowie daß
f) Mischungen aus den Hartphasenpolymerisaten B1 mit B'3 sowie B2 mit B'3 Entmischungstemperaturen von über 100 Grad C aufweisen, sowie daß
g) B'3 keine Monomereinheiten, ausgewählt aus der Gruppe Acrylnitril, Methacrylnitril, Maleinsäureanhydrid und N-substituiertes Maleinimid mit aromatischen Substituenten enthält.

3. Hochschlagzähe Polymermischungen M nach den Ansprüchen 1 und 2, dadurch gekennzeichnet, daß
h) neben den Polymerisaten P1, P2 und B'3 noch ein weiteres zwei- oder mehrphasiges Polymerisat P4, bestehend aus mindestens einer gegebenenfalls vernetzten Zähphase A4 mit einer Glasübergangstemperatur Tg < 10 Grad C, die wenigstens teilweise kovalent mit mindestens einer thermoplastischen Hartphase B4 mit einer Glasübergangstemperatur Tg < 30 Grad C verknüpft ist, in Mengen bis zu 50 Gew.-% zugegen ist, wobei sich die Anteile von P1, P2, B'3 und P4 zu 100 Gew.-% ergänzen, sowie daß
i) Mischungen aus den Hartphasenpolymerisaten B1 mit B4 sowie B2 mit B4, wenn sie nicht mit Zähphasenpolymerisaten kovalent verknüpft sind, sowie Mischungen aus B4 und B'3 Entmischungstemperaturen von über 100 Grad C aufweisen, sowie daß
k) B4 keine Monomereinheiten ausgewählt aus der Gruppe Acrylnitril, Methacrylnitril, Maleinsäureanhydrid und N-substituiertes Maleinimid mit aromatischen Substituenten enthält.

4. Hochschlagzähe Polymermischungen M nach Ansprüchen 1 und 2, dadurch gekennzeichnet, daß sie aus
o) 1 - 99 Gew.-Teilen Polymerisat P1 mit einer Hartphase B1 bestehend aus Polystyrol oder Polyα-methylstyrol, sowie
p) 99 - 1 Gew.-Teilen Polymerisat P2 mit einer Hartphase B2 gemäß Formel II 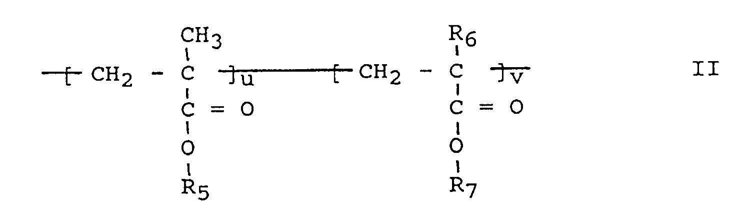 worin
R₅ für Methyl, Ethyl,
R₆ für Wasserstoff, Methyl,
R₇ für einen ggfs. substituierten Cycloalkylrest mit 5 bis 8 Kohlenstoffatomen,
steht,
und u und v sich - ggfs. mit weiteren in Mengen von 0 bis 20 Gew.-% vorhandenen Monomeren - zu 100 Gew.-% ergänzen, mit der Maßgabe, daß v einen Bereich von 5 bis 95 Gew.-% kennzeichnet,
bestehen.

5. Verwendung der hochschlagzähen Polymermischungen M nach den Ansprüchen 1 bis 4 zur Herstellung von mechanisch hochbeanspruchten Formteilen wie Gehäuse, Stoßfänger oder Tragevorrichtungen.

## Claims

1. Highly impact-resistant polymer mixtures M comprising two two-phase or multi-phase polymers P1 and P2, wherein P1 comprises at least one optionally cross-linked viscous phase A1 having a glass transition temperature Tg < 10°C, which is at least partially covalently bonded with at least one thermoplastic hard phase B1 having a glass transition temperature Tg > 30°C, and P2 comprises at least one optionally cross-linked viscous phase A2 having a glass transition temperature Tg <10°C which is at least partially covalently bonded with at least one thermoplastic hard phase B2 having a glass transition temperature Tg > 30°C, characterised in that
a) the hard phase B1 comprises a polymer selected from the group polystyrene, polymethylstyrene, polycarbonate, polyalkyleneterephthalate, or chlorine rubber, and in that
b) the hard phase B2 comprises a polymer of formula I 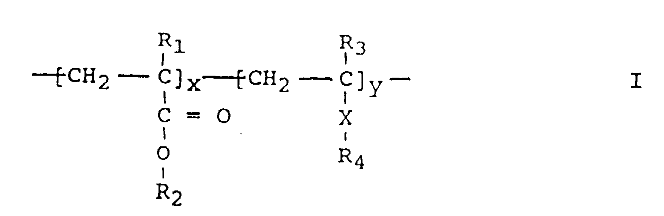 wherein
R₁, R₃ is hydrogen, methyl,
R₂ is alkyl having 1 to 6 carbon atoms
-X- is 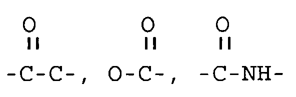
and R₄ is an optionally substituted cycloalkyl group having 5 to 8 carbon atoms or an optionally substituted aryl group having 6 to 12 carbon atoms,
and x and y, optionally with further monomers present in amounts of 0 to 20 wt.%, make up 100 wt.%, with the proviso that y characterises a range of between 0 to 100 wt.%, and in that
c) mixtures comprising the hard phase polymers B1 and B2 have, unless they are covalently bonded with the viscous phase polymers A1 and A2, demixing temperatures of more than 100°C, and in that
d) the hard phase polymers B1 and B2 do not comprise any monomer units selected from the group acrylonitrile, methacrylonitrile, maleic acid anhydride and N-substituted maleinimide with aromatic substituents.

2. Highly impact-resistant polymer mixtures M according to Claim 1, characterised in that
e) in addition to polymers P1 and P2, there is a further single-phase thermoplastic polymer B'3 in amounts of up to 50 wt.%, the amounts of P1, P2 and B'3 adding up to 100 wt.%, and in that
f) mixtures comprising the hard phase polymers B1 and B'3 as well as those comprising B2 and B'3 have demixing temperatures of more than 100°C, and in that
g) B'3 does not comprise any monomer units selected from the group acrylonitrile, methacrylonitrile, maleic acid anhydride and N-substituted maleinimide with aromatic substituents.

3. Highly impact-resistant polymer mixtures M according to Claims 1 and 2, characterised in that
h) in addition to the polymers P1, P2 and B'3, there is, in amounts of up to 50 wt.%, a further two- or multi-phase polymer P4, comprising at least one optionally cross-linked viscous phase A4 having a glass transition temperature Tg < 10°C, which is at least partially covalently bonded with at least one thermoplastic hard phase B4 having a glass transition temperature Tg < 30°, the amounts of P1, P2, B'3 and P4 adding up to 100 wt.%, and in that
i) mixtures comprising the hard phase polymers B1 and B4 as well as those comprising B2 and B4, unless they are covalently bonded with viscous phase polymers, and mixtures of B4 and B'3 have demixing temperatures of more than 100°C, and in that
k) B4 does not comprise any monomer units selected from the group acrylonitrile, methacrylonitrile, maleic acid anhydride and N-substituted maleinimide with aromatic substituents.

4. Highly impact-resistant polymer mixtures M according to Claims 1 and 2, characterised in that they comprise
o) 1 to 99 parts by weight of polymer P1 comprising a hard phase B1 containing polystyrene or poly-α-methylstyrene, as well as
p) - 99 to 1 parts by weight of polymer P2 comprising a hard phase B2 according to formula II 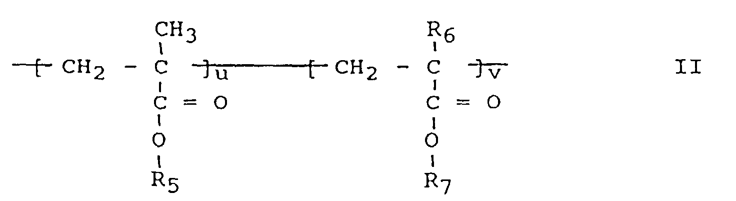 wherein
R₅ is methyl, ethyl,
R₆ is hydrogen, methyl,
R₇ is an optionally substituted cycloalkyl group having 5 to 8 carbon atoms
and u and v, optionally with further monomers present in amounts of 0 to 20 wt.%, add up to 100 wt.%, with the proviso that v characterises a range of from 5 to 95 wt.%.

5. Use of the highly impact-resistant polymer mixtures M according to Claims 1 to 4 in order to produce moulded articles such as housings, shock absorbers or supporting frames which are subjected to great mechanical stress.

## Revendications

1. Mélanges de polymères M de résilience élevée, contenant deux polymères P1 et P2 en deux phases ou plus, P1 se composant d'au moins une phase visqueuse éventuellement réticulée A1, ayant une température de transition vitreuse Tg inférieure à 10°C, qui est reliée au moins partiellement par liaison covalente à au moins une phase dure thermoplastique B1 ayant une température de transition vitreuse Tg supérieure à 30°C, et P2 se composant d'au moins une phase visqueuse éventuellement réticulée A2, ayant une température de transition vitreuse Tg inférieure à 10°C, qui est reliée au moins partiellement par liaison covalente à au moins une phase dure thermoplastique B2 ayant une température de transition vitreuse Tg supérieure à 30°C,
caractérisés en ce que
a) la phase dure B1 est composée d'un polymère qui est choisi dans le groupe comprenant le polystyrène, le polyméthylstyrène, le polycarbonate, le polytéréphtalate d'alkylène ou le caoutchouc chloré,
b) la phase dure B2 est composée d'un polymère de formule I 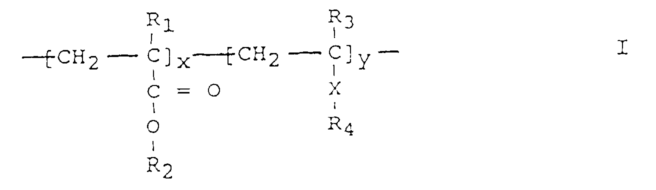 dans laquelle
R₁ et R₃ sont mis pour des atomes d'hydrogène ou des restes méthyle,
R₂ est mis pour un reste alkyle à 1-6 atomes de carbone,
-X- est mis pour 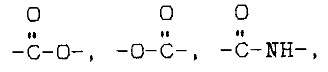
R₄ est mis pour un reste cycloalkyle à 5-8 atomes de carbone éventuellement substitué ou pour un reste aryle à 6-12 atomes de carbone éventuellement substitué, et
x et y s'additionnent - éventuellement avec d'autres monomères présents dans des proportions de 0 à 20% en poids - à 100% en poids, étant spécifié que y indique une gamme entre 0 et 100% en poids,
c) les mélanges des polymères B1 et B2 des phases dures, lorqu'ils ne sont pas reliés aux polymères A1 et A2 des phases visqueuses par liaison covalente, présentent des températures de démixtion supérieures à 100°C, et
d) les polymères B1 et B2 des phases dures ne contiennent pas de motifs monomères choisis dans le groupe comprenant l'acrylonitrile, le méthacrylanitrile, l'anhydride maléique et le maléimide N-substitué avec des substituants aromatiques.

2. Mélanges de polymères M de résilience élevée selon la revendication 1, caractérisés en ce que
e) en plus des polymères P1 et P2, un autre polymère thermoplastique B'3 en une seule phase est encore présent dans des proportions allant jusqu'à 50% en poids, les proportions de P1, P2 et B'3 s'additionnant à 100% en poids,
f) les mélanges des polymères des phases dures B1 avec B'3 et B2 avec B'3 présentent des températures de démixtion supérieures à 100°C, et
g) B'3 ne contient pas de motifs monomères choisis dans le groupe comprenant l'acrylonitrile, le méthacrylonitrile, l'anhydride maléique et le maléimide N-substitué avec des substituants aromatiques.

3. Mélanges de polymères M de résilience élevée selon la revendication 1 ou 2, caractérisés en ce que
h) en plus des polymères P1, P2 et B'3, un autre polymère P4 en deux phases ou plus, composé d'au moins une phase visqueuse éventuellement réticulée A4 ayant une température de transition vitreuse Tg inférieure à 10°C, qui est reliée au moins partiellement par liaison covalente à au moins une phase dure thermoplastique B4 ayant une température de transition vitreuse Tg inférieure à 30°C, est encore présent dans des proportions allant jusqu'à 50% en poids, les proportions de P1, P2, B'3 et P4 s'additionnant à 100% en poids,
i) les mélanges des polymères des phases dures B1 avec B4 et B2 avec B4, lorsqu'ils ne sont pas reliés aux polymères des phases visqueuses par liaison covalente, ainsi que les mélanges de B4 et B'3 présentent des températures de démixtion supérieures à 100°C, et
k) B4 ne contient pas de motifs monomères choisis dans le groupe comprenant l'acrylonitrile, le méthacrylonitrile, l'anhydride maléique et le maléimide N-substitué avec des substituants aromatiques.

4. Mélanges de polymères M de résilience élevée selon la revendication 1 ou 2, caractérisés en ce qu'ils se composent de
o) 1 à 99 parties en poids de polymère P1 comportant une phase dure B1 composée de polystyrène ou de poly(α-méthylstyrène), ainsi que de
p) 99 à 1 parties en poids de polymère P2 comportant une phase dure B2 de formule II 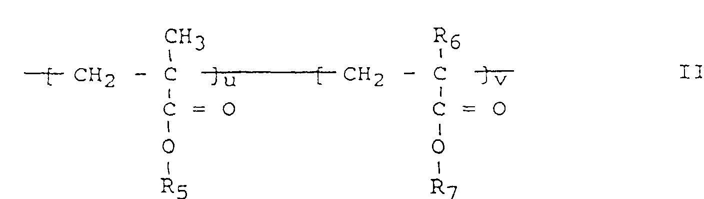 dans laquelle
R₅ est mis pour un reste méthyle ou éthyle,
R₆ est mis pour un atome d'hydrogène ou pour un reste méthyle,
R₇ est mis pour un reste cycloalkyle à 5-8 atomes de carbone éventuellement substitué, et
u et v s'additionnent - éventuellement avec d'autres monomères présents dans des proportions de 0 à 20% en poids - à 100% en poids, étant spécifié que v indique une gamme de 5 à 95% en poids.

5. Utilisation des mélanges de polymères M de résilience élevée selon l'une quelconque des revendications 1 à 4 pour la fabrication de pièces moulées soumises à de fortes contraintes mécaniques, telles que des carters, des pare-chocs ou des dispositifs porteurs.
